(19) **Europäisches Patentamt**

**European Patent Office**

**Office européen des brevets**

(11) **EP 0 718 598 B1**

(12) **FASCICULE DE BREVET EUROPEEN**

(45) Date de publication et mention
de la délivrance du brevet:
**12.01.2000 Bulletin 2000/02**

(51) Int Cl.⁷: **G01C 17/38**

(21) Numéro de dépôt: **95402632.4**

(22) Date de dépôt: **22.11.1995**

(54) **Correction des erreurs d'un magnétomètre**

Korrektur von Fehlern eines Magnetometers

Correction of the errors of a magnetometer

(84) Etats contractants désignés:
**DE GB IT**

(30) Priorité: **19.12.1994 FR 9415231**

(43) Date de publication de la demande:
**26.06.1996 Bulletin 1996/26**

(73) Titulaire: **EUROCOPTER**
**F-13725 Marignane Cédex (FR)**

(72) Inventeurs:
• **Assous, Eric Charles**
**F-13008 Marseille (FR)**

• **Petillon, Jean-Paul**
**F-13127 Vitrolles (FR)**

(74) Mandataire: **Bonnetat, Christian**
**CABINET BONNETAT**
**29, rue de St. Pétersbourg**
**75008 Paris (FR)**

(56) Documents cités:
**EP-A- 0 226 653** **FR-A- 2 507 770**
**GB-A- 2 128 749**

Printed by Jouve, 75001 PARIS (FR)

## Description

La présente invention concerne un procédé d'identification simultanée et de correction des erreurs dues à des perturbations magnétiques et à de mauvais alignements dans les mesures d'un magnétomètre monté à bord d'un véhicule, ainsi qu'un dispositif pour la mise en oeuvre de ce procédé et divers systèmes utilisant ledit dispositif.

On sait qu'un magnétomètre monté à bord d'un véhicule, en particulier un aéronef, est généralement soumis à des perturbations magnétiques et qu'il n'est pas rigoureusement aligné par rapport au trièdre de référence du véhicule, ce qui fausse les mesures de champ magnétique effectuées par ce magnétomètre.

On distingue essentiellement quatre types de perturbations, dont :

- trois types de perturbations magnétiques, à savoir plus précisément :

  . des perturbations dites de "fers doux", dues à la présence à proximité du magnétomètre de matériaux ferromagnétiques qui, bien que non aimantés, dévient les lignes de champ ;
  . des perturbations dites de "fers durs", dues à la présence à proximité du magnétomètre de matériaux aimantés et/ou de conducteurs électriques parcourus par des courants continus ; et
  . des champs magnétiques qui sont engendrés par les courants de Foucault créés par des variations de flux magnétiques dans les structures métalliques du véhicule ; et

- des erreurs d'installation. On sait que le positionnement idéal du magnétomètre correspond à un alignement parfait du trièdre de référence du magnétomètre par rapport à celui du véhicule. Or, en raison de tolérances de fabrication, cet alignement parfait n'est jamais réalisé, ce qui perturbe les mesures vectorielles effectuées.

Afin d'obtenir des mesures exactes, il est donc nécessaire, le cas échéant, d'identifier les erreurs engendrées par ces perturbations et de les corriger. Différentes méthodes sont connues pour effectuer une telle correction.

Selon une première méthode connue qui nécessite pour sa mise en oeuvre une installation précise du magnétomètre sur le véhicule, on définit un modèle de perturbation magnétique de la forme Hm = [B].H + $H_B$, dans lequel :

- Hm représente le champ perturbé mesuré par le magnétomètre ;
- H représente la valeur effective du champ magnétique ;
- [B] est une matrice symétrique tenant compte des perturbations engendrées par les "fers doux", l'absence d'une partie anti-symétrique étant due à l'installation précise et appropriée du magnétomètre sur le véhicule ; et
- $H_B$ représente un champ perturbateur dû aux perturbations engendrées par les "fers durs".

On notera qu'en l'absence de perturbations magnétiques, la matrice [B] représentant alors la matrice identité et le champ perturbateur $H_B$ étant nul, le module du champ magnétique mesuré est constant et l'extrémité décrit une sphère. Sous l'effet de perturbations, cette sphère est transformée en un ellipsoïde décentré.

Ladite première méthode de correction connue préconise d'effectuer les opérations suivantes :

- effectuer un grand nombre de mesures du champ magnétique au cours de variations du cap et de l'assiette du véhicule ;
- déterminer l'ellipsoïde correspondant au mieux aux mesures effectuées ; et
- calculer à partir de l'ellipsoïde ainsi déterminée les composantes de la matrice [B] et du champ perturbateur $H_B$. Le modèle obtenu alors permet de calculer le champ effectif H à partir de mesures ultérieures effectuées par le magnétomètre et soumises à des perturbations magnétiques.

Cette méthode exige toutefois, comme indiqué précédemment, un agencement particulier et très précis du magnétomètre sur le véhicule, ce qui nécessite une fabrication et/ou un réglage spécifiques et coûteux. En outre, la précision obtenue par cette méthode est peu satisfaisante. Ces inconvénients sont partiellement résolus par une seconde méthode connue qui est soumise à des contraintes beaucoup moins importantes que la méthode précédente concernant l'agencement du magnétomètre sur le véhicule, cette seconde méthode connue étant mise en oeuvre en deux étapes successives :

- dans une première étape, on détermine, à partir d'un procédé semblable à celui de la méthode précédente, une mesure conservant la constance de la norme du champ, ladite mesure n'étant plus affectée que par un mésalignement ; et
- dans une seconde étape, on détermine la composante non symétrique de la matrice de transformation semblable à la matrice [B] précédente, à partir des variations de la composante verticale du champ magnétique, cette étape étant mise en oeuvre en utilisant des mesures d'assiettes.

Cette seconde méthode connue présente de nombreux inconvénients. En particulier, la mise en oeuvre des deux étapes précitées suppose une procédure de manoeuvres complexe et longue du véhicule, au cours de laquelle sont effectuées les mesures utilisées.

Par ailleurs, par le document GB-2 128 749, on connaît une boussole électronique qui est montée sur un véhicule, qui comporte trois capteurs magnétiques susceptibles de mesurer les composantes orthogonales d'un champ magnétique et qui est formée de manière à compenser, lors de la mesure du champ magnétique terrestre, un champ magnétique perturbateur induit par le véhicule. Pour ce faire, ledit document connu préconise de réaliser des mesures préliminaires en soumettant le véhicule à des manoeuvres déterminées et d'utiliser ces mesures préliminaires pour compenser les mesures ultérieures du champ magnétique.

La présente invention a pour objet de remédier à ces inconvénients. Elle concerne un procédé permettant de corriger de façon simple, rapide et précise des erreurs dans les mesures d'un magnétomètre monté à bord d'un véhicule, en particulier un aéronef, erreurs qui sont dues à des perturbations magnétiques, ainsi qu'à un mauvais alignement du magnétomètre par rapport à un référentiel véhicule lié audit véhicule.

A cet effet, selon l'invention, ledit procédé est remarquable en ce que :

- on définit un modèle théorique correcteur des erreurs du magnétomètre de la forme :

$$Hc = [A].Hm + a.Hm' + Hp,$$

dans lequel :

  .    Hc est le champ corrigé,
  .    [A] est une matrice à déterminer,
  .    $\underline{a}$ est un coefficient ou une matrice à déterminer,
  .    Hp est un champ perturbateur à déterminer,
  .    Hm est la valeur mesurée par le magnétomètre dans le référentiel véhicule du champ magnétique, et
  .    Hm' est la dérivée par rapport au temps dudit champ magnétique mesuré Hm qui varie en fonction de la position angulaire dudit véhicule ;

- on considère que le champ corrigé Hc est le champ terrestre défini dans le référentiel véhicule de sorte que :

$$[A].Hm + a.Hm' + Hp = [M].H$$

avec :

  .    H la valeur effective du champ magnétique dans un référentiel de base, et
  .    [M] une matrice de passage dudit référentiel de base audit référentiel véhicule ;

- on effectue au moins une mesure Hm du champ magnétique au moyen du magnétomètre ;
- on calcule la dérivée Hm' dudit champ magnétique mesuré Hm ;
- on détermine les coefficients de la matrice de passage [M] ;
- on définit un vecteur d'erreur E de composantes Ex, Ey et Ez, défini par la relation :

$$E = [M].H - ([A].Hm + a.Hm' + Hp) ;$$

- on définit une erreur globale $E^2 = Ex^2 + Ey^2 + Ez^2$ ;
- on définit un système d'équations formé de $\underline{n}$ équations du type $(\partial\Sigma E^2)/\partial ci = 0$, i = 1 à n, $(\partial\Sigma E^2)/\partial ci$ correspondant à la dérivée partielle de la somme des erreurs globales, pour toutes les mesures, $\Sigma E^2$ par rapport à un coefficient $\underline{ci}$, les différents coefficients $\underline{ci}$ représentant les coefficients à déterminer dudit modèle théorique, à savoir les coefficients de [A], de $\underline{a}$ et de Hp, ainsi qu'au moins une composante du champ magnétique effectif H ;
- on résout ledit système d'équations de manière à obtenir lesdits coefficients $\underline{ci}$, dont ladite composante du champ magnétique effectif H ; et
- on utilise le modèle correcteur obtenu à partir desdits coefficients pour corriger les erreurs dues à des perturbations magnétiques et à de mauvais alignements dans les mesures dudit magnétomètre.

Ainsi, grâce à l'invention, la détermination du modèle correcteur est effectuée en une seule étape, ce qui entraîne une mise en oeuvre simplifiée, en particulier en ce qui concerne la procédure de manoeuvres du véhicule, au cours de laquelle sont effectuées les mesures.

De plus, le procédé conforme à l'invention permet de déterminer, simultanément au calcul dudit modèle correcteur, au moins une composante du champ magnétique effectif dans le référentiel de base.

L'invention présente en outre de nombreux autres avantages. En particulier, elle entraîne :

- une plus grande précision des mesures, confirmée lors d'essais en vol sur des aéronefs ; et
- une installation complètement libre des magnétomètres sur le véhicule, permettant de simplifier le dispositif de fixation, ce qui entraîne un gain de masse et une réduction du coût de fabrication.

De plus, la présente invention n'est pas limitée en ce qui concerne les éléments du modèle théorique, et en particulier l'amplitude des termes de la matrice [A], ce qui permet d'alléger les contraintes de réalisation du magnétomètre.

Dans les modes de réalisation pour lesquels on ne détermine que la composante verticale du champ magnétique, on utilise avantageusement comme erreur globale $E^2 = Ez^2$, de sorte que seuls les coefficients de la troisième ligne de la matrice $[M]^{-1}$ sont utilisés, ladite matrice $[M]^{-1}$ étant la matrice de passage dudit référentiel véhicule audit référentiel de base, lesdits coefficients étant déterminés à partir des assiettes longitudinale et transversale dudit véhicule.

Par ailleurs, dans les modes de réalisation pour lesquels on détermine les trois composantes du champ magnétique, les coefficients de la matrice [M] sont déterminés de façon avantageuse à partir des assiettes longitudinale et transversale, ainsi qu'à partir du cap dudit véhicule.

On notera que ce mode de mise en oeuvre permet d'augmenter la précision par rapport aux méthodes de correction connues précitées, puisque lesdites méthodes connues utilisent des propriétés secondaires du champ magnétique à mesurer, à savoir la constance du module et la constance de la composante verticale de ce champ, comme indiqué précédemment, tandis que la présente invention utilise directement une valeur de cap, en prenant en compte la constance des trois composantes du champ magnétique dans le référentiel de base.

Selon l'invention, ledit modèle théorique peut présenter diverses formes pour la mise en oeuvre du procédé.

Selon un premier mode de réalisation particulièrement avantageux, ledit modèle théorique est un modèle linéaire non stationnaire, dans lequel $\underline{a}$ représente une matrice [T], prenant en compte les courants de Foucault existant sur le véhicule, ainsi que le retard entre, d'une part, la mesure du champ magnétique et, d'autre part, les mesures des assiettes et du cap du véhicule.

Ce premier mode de réalisation, qui permet d'identifier une composante de perturbation magnétique présentant une proportionnalité matricielle avec la dérivée du champ magnétique mesuré, est particulièrement bien adapté pour un véhicule tel qu'un avion gros porteur à structure métallique, dans laquelle sont engendrés des courants de Foucault lors de phases de virage, qui perturbent les mesures du magnétomètre.

Selon un second mode de réalisation, ledit modèle théorique est un modèle linéaire non stationnaire simplifié, dans lequel $\underline{a}$ représente un coefficient $\tau$ prenant en compte le retard entre, d'une part, la mesure du champ magnétique et, d'autre part, les mesures des assiettes et du cap du véhicule.

Ces deux premiers modes de réalisation permettent de plus de compenser dans une certaine mesure la limitation de la bande passante du magnétomètre.

On notera de plus que les deux modèles précédents utilisant la dérivée du champ magnétique mesuré sont tous deux particulièrement avantageux pour une installation d'essais qui enregistre des mesures effectuées lors de manoeuvres du véhicule, lesdites mesures étant exploitées ultérieurement, puisque ces modèles permettent de prendre en compte les dissymétries des retards dans l'acquisition, d'une part, des mesures du champ magnétique et, d'autre part, des mesures d'assiettes et de cap, qui sont souvent difficiles à maîtriser dans une installation d'essais.

De préférence, la dérivée Hm' du champ magnétique mesuré Hm est calculée par la relation $\overrightarrow{Hm}' = \overrightarrow{Hm} \wedge \vec{\omega}$, dans laquelle $\vec{\omega}$ représente le vecteur de rotation instantanée du véhicule.

En outre, avantageusement, la valeur de cap utilisée peut représenter une valeur de cap géographique ou une valeur de cap affectée d'une erreur constante quelconque, telle que celle délivrée par une centrale d'attitude et de cap en mode gyroscopique libre, ce qui permet une mise en oeuvre variée de l'invention.

La présente invention concerne également un dispositif pour la mise en oeuvre du procédé précité.

Selon l'invention, ledit dispositif est remarquable en ce qu'il comporte :

- un premier module de calcul recevant le champ magnétique Hm mesuré par le magnétomètre dans le référentiel véhicule et déterminant la dérivée Hm' par rapport au temps dudit champ magnétique mesuré Hm qui varie en fonction de la position angulaire du véhicule ;

- un second module de calcul déterminant les coefficients d'une matrice de passage [M] dudit référentiel de base audit référentiel véhicule ; et

- un module principal de calcul relié auxdits premier et second modules de calcul, déterminant au moins une composante du champ magnétique effectif, et corrigeant les erreurs dues à des perturbations magnétiques et à de mauvais alignements dans les mesures dudit magnétomètre, en utilisant un champ corrigé Hc vérifiant Hc = [A]. Hm + a.Hm' + Hp, avec [A] une matrice à déterminer, $a$ un coefficient ou une matrice à déterminer, et Hp un champ perturbateur à déterminer, ledit module principal de calcul déterminant ledit champ corrigé Hc :

- . en résolvant un système d'équations formé de $n$ équations du type $(\partial \Sigma E^2)/\partial ci = 0$, i = 1 à n, $E^2$ étant une erreur globale obtenue à partir d'un vecteur d'erreur E tel que E = [M].H - ([A].Hm + a.Hm' + Hp), la matrice de passage [M] étant reçue du second module de calcul, et $(\partial \Sigma E^2)/\partial ci$ correspondant à la dérivée partielle de la somme des erreurs globales, pour toutes les mesures, $\Sigma E^2$ par rapport à un coefficient $ci$, de manière à obtenir les différents coefficients $ci$ représentant les coefficients à déterminer dudit champ corrigé, à savoir les coefficients de [A], de $a$ et de Hp, ainsi qu'au moins une composante du champ magnétique effectif H ; et

- . en calculant ledit champ corrigé Hc à partir desdits coefficients $ci$ et de la dérivée Hm' reçue dudit premier module de calcul.

On notera que la présente invention concerne en outre deux systèmes comportant le dispositif conforme à l'invention, à savoir, d'une part, un système de référence d'attitude et de cap embarqué à bord d'un aéronef et comportant un magnétomètre utilisé pour corriger une éventuelle dérive de la mesure du cap et, d'autre part, une centrale inertielle d'un aéronef, qui est associée à un magnétomètre.

Dans le système de référence d'attitude et de cap, le dispositif conforme à l'invention est utilisé pour corriger les erreurs de mesure dudit magnétomètre, tandis que, dans la centrale inertielle, ledit dispositif est utilisé pour déterminer de façon précise, en collaboration avec ledit magnétomètre, le champ magnétique terrestre, ainsi que pour corriger les erreurs de mesure dudit magnétomètre.

Les figures du dessin annexé feront bien comprendre comment l'invention peut être réalisée. Sur ces figures, des références identiques désignent des éléments semblables.

La figure 1 montre de façon schématique un véhicule comportant un dispositif conforme à l'invention.

La figure 2 illustre des systèmes de référence permettant d'expliciter la mise en oeuvre de la présente invention.

La figure 3 est le schéma synoptique du dispositif conforme à l'invention.

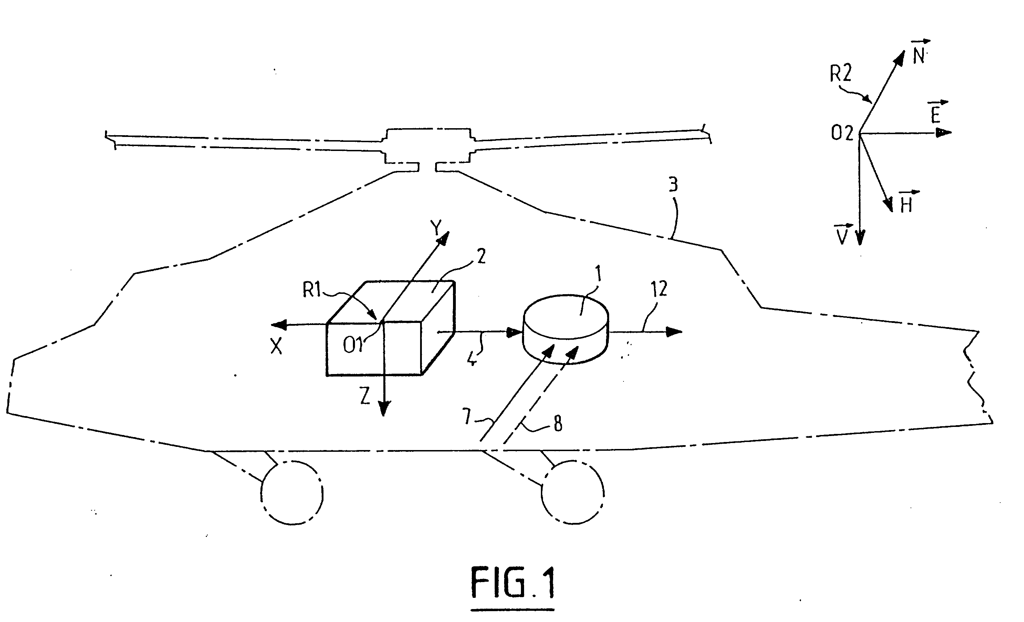

Le dispositif 1 conforme à l'invention est destiné à corriger des erreurs dues à des perturbations magnétiques et à de mauvais alignements dans les mesures d'un magnétomètre 2 monté à bord d'un véhicule 3, ledit véhicule 3 étant représenté schématiquement sous la forme d'un hélicoptère sur la figure 1.

Le magnétomètre 2 est susceptible de mesurer, dans un référentiel véhicule R1 qui est associé au véhicule, les composantes d'une grandeur physique magnétique orientée et d'amplitude constante localement, représentée par un vecteur, tel le vecteur $\vec{H}$ orienté dans l'exemple représenté selon le gradient du potentiel magnétique terrestre. Le champ magnétique Hm mesuré par ledit magnétomètre 2 vérifie la relation Hm = [M].H, dans laquelle H représente la valeur effective du champ magnétique dans un référentiel de base R2 et [M] représente la matrice de passage dudit référentiel de base R2 audit référentiel véhicule R1.

Ledit référentiel de base R2 peut par exemple être formé par trois axes $\vec{V}$ , $\vec{N}$ et $\vec{E}$ définis comme suit :

- V est un axe parallèle au gradient du champ de gravité terrestre, orienté vers le centre de la terre, et donnant la verticale locale ;

- N est un axe horizontal donnant le nord géographique ou directionnel ; et

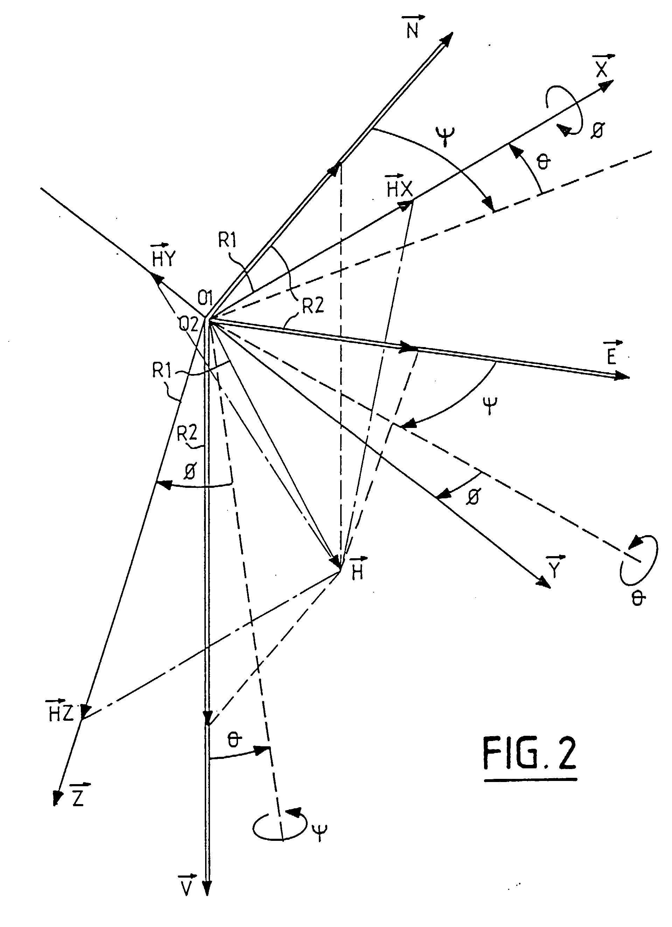

- E est un axe donnant l'est, tel que représenté sur les figures 1 et 2.

De façon connue, le passage de l'un à l'autre de ces référentiels R1 et R2 nécessite trois rotations successives définies par les angles d'Euler $\psi$, $\Theta$ et $\Phi$ représentés sur la figure 2, parmi lesquels :

- $\psi$ est l'angle de cap,

- $\Theta$ est l'angle d'assiette longitudinale, et

- $\Phi$ est l'angle d'assiette transversale.

Ces trois rotations s'écrivent selon la matrice usuelle des angles d'Euler, c'est-à-dire la matrice de passage $[M]^{-1}$ permettant le passage du référentiel R1 (O1XYZ) vers le référentiel R2, définie comme suit :

$$[M]^{-1} =$$

$$\begin{vmatrix} \cos\psi.\cos\Theta & \cos\psi.\sin\Theta.\sin\Phi - \sin\psi.\cos\Phi & \sin\psi.\sin\Phi + \cos\psi.\sin\Theta.\cos\Phi \\ \sin\psi.\cos\Theta & \cos\psi.\cos\Phi + \sin\psi.\sin\Theta.\sin\Phi & \sin\psi.\sin\Theta.\cos\Phi - \cos\psi.\sin\Phi \\ -\sin\Theta & \cos\Theta.\sin\Phi & \cos\Theta.\cos\Phi \end{vmatrix}$$

Toutefois, un tel magnétomètre 2 est généralement soumis à des perturbations magnétiques et n'est généralement pas parfaitement aligné sur les axes du véhicule, ce qui fausse les mesures de sorte que le champ magnétique mesuré Hm ne vérifie pas la relation précitée et ne présente pas les composantes HX, HY et HZ représentées sur la figure 2.

De façon connue, il existe essentiellement quatre types de perturbations qui faussent les mesures du magnétomètre 2, dont :

- trois types de perturbations magnétiques, à savoir plus précisément :

    . des perturbations dites de "fers doux", dues à la présence à proximité du magnétomètre 2 de matériaux ferromagnétiques non aimantés qui dévient les lignes de champ ;
    . des perturbations dites de "fers durs", dues à la présence à proximité du magnétomètre 2 de matériaux aimantés et/ou de conducteurs électriques parcourus par des courants continus ; et
    . des champs magnétiques qui sont engendrés par les courants de Foucault créés par des variations de flux magnétiques dans les structures métalliques du véhicule ; et

- des erreurs d'installation. On sait que le positionnement idéal du magnétomètre correspond à un alignement parfait du référentiel de référence du magnétomètre avec celui du véhicule. Or, en raison des tolérances de fabrication, cet alignement parfait n'est jamais réalisé, ce qui perturbe les mesures vectorielles effectuées.

Le dispositif 1 conforme à l'invention est destiné à identifier les erreurs engendrées par ces perturbations magnétiques et mécaniques, et à les corriger.

On décrit ci-après un premier mode de mise en oeuvre de l'invention permettant de déterminer simultanément :

- un modèle correcteur permettant de corriger les erreurs dues à des perturbations magnétiques et mécaniques dans les mesures du magnétomètre 2 ; et
- les trois composantes du champ magnétique H dans le référentiel de base.

A cet effet, on définit tout d'abord un modèle théorique correcteur des erreurs du magnétomètre de la forme :

$$Hc = [A].Hm + [T].Hm' + Hp \tag{1}$$

dans lequel, en plus de l'élément Hm précité :

- Hc est le champ corrigé ;
- [A] est une matrice à déterminer, prenant en compte les perturbations dites de "fers doux" et des mésalignements, sans limitation de valeur angulaire ;
- [T] est une matrice à déterminer, prenant en compte les courants de Foucault, les différences de retard entre des mesures du champ magnétique, d'une part, et des mesures d'assiette et de cap, d'autre part, ainsi que, dans une certaine mesure, la limitation de la bande passante du magnétomètre 2 ;
- Hp est un champ perturbateur à déterminer ; et
- Hm' est la dérivée par rapport au temps dudit champ magnétique mesuré Hm qui varie en fonction de la position angulaire du véhicule 3.

On considère que le champ corrigé Hc est le champ terrestre projeté dans le référentiel véhicule de sorte que :

$$[A].Hm + [T].Hm' + Hp = [M].H$$

Puis on effectue, lors de manoeuvres dudit véhicule 3, des mesures du champ magnétique, au moyen du magnétomètre 2, ainsi que des mesures de cap et d'assiettes au moyen d'un système approprié, comme par exemple une centrale de cap et d'attittude en mode gyroscopique libre non représentée et montée sur ledit véhicule 3.

Ces manoeuvres peuvent correspondre, par exemple pour un aéronef, à deux virages, à droite puis à gauche, de 360° avec un roulis de l'ordre de 30°.

Les mesures d'assiettes et éventuellement de cap sont utilisées pour calculer la matrice de passage [M] telle que définie précédemment.

Ledit modèle théorique (1) peut s'écrire sous la forme du système suivant :

$A_{11}$ Hmx + $A_{12}$ Hmy + $A_{13}$ Hmz + $T_{11}$ Hmx' + $T_{12}$ Hmy' + $T_{13}$ Hmz' + Hpx = $R_{11}$ Hn + $R_{12}$ He + $R_{13}$ Hv

$A_{21}$ Hmx + $A_{22}$ Hmy + $A_{23}$ Hmz + $T_{21}$ Hmx' + $T_{22}$ Hmy' + $T_{23}$ Hmz' + Hpy = $R_{21}$ Hn + $R_{22}$ He + $R_{23}$ Hv

$A_{31}$ Hmx + $A_{32}$ Hmy + $A_{33}$ Hmz + $T_{31}$ Hmx + $T_{32}$ Hmy' + $T_{33}$ Hmz' + Hpz = $R_{31}$ Hn + $R_{32}$ He + $R_{33}$ Hv

dans lequel :

- les termes $A_{ij}$, $T_{ij}$ et $R_{ij}$ (i = 1, 2, 3 et j = 1, 2, 3) sont respectivement les coefficients des matrices [A], [T] et [M] ;
- Hmx, Hmy et Hmz sont les composantes du vecteur Hm ;
- Hmx', Hmy' et Hmz' sont les composantes du vecteur Hm' ;
- Hpx, Hpy et Hpz sont les composantes du vecteur Hp ; et
- Hn, He et Hv sont les composantes du vecteur H.

On remarquera que ce système ne peut être déterminé qu'à une constante multiplicative près. Pour lever l'indétermination, on peut diviser les différentes équations par un coefficient apparaissant dans chacune d'elles, par exemple Hn, He ou Hv. Toutefois, comme les coefficients He et Hv sont susceptibles de présenter des valeurs très faibles dans certaines régions du globe terrestre, ce qui risque de poser des problèmes de calcul, on divise de préférence lesdites équations par Hn de manière à obtenir le système suivant :

$a_{11}$ Hmx + $a_{12}$ Hmy + $a_{13}$ Hmz + $t_{11}$ Hmx' + $t_{12}$ Hmy' + $t_{13}$ Hmz' + hpx = $R_{11}$ + $R_{12}$ he + $R_{13}$ hv

$a_{21}$ Hmx + $a_{22}$ Hmy + $a_{23}$ Hmz + $t_{21}$ Hmx' + $t_{22}$ Hmy' + $t_{23}$ Hmz' + hpy = $R_{21}$ + $R_{22}$ he + $R_{23}$ hv

$a_{31}$ Hmx + $a_{32}$ Hmy + $a_{33}$ Hmz + $t_{31}$ Hmx' + $t_{32}$ Hmy' + $t_{33}$ Hmz' + hpz = $R_{31}$ + $R_{32}$ he + $R_{33}$ hv

avec :

$a_{ij}$ = $A_{ij}$/Hn
$t_{ij}$ = $T_{ij}$/Hn
hpx = Hpx/Hn
hpy = Hpy/Hn
hpz = Hpz/Hn
he = He/Hn
hv = Hv/Hn

Puis on considère le vecteur d'erreur E de composantes Ex, Ey et Ez, défini par la relation :

$$E = [M].H - ([A].Hm + [T].Hm' + Hp).$$

Toutefois, afin de pouvoir utiliser le système précédent, on détermine un vecteur d'erreur modifié $\varepsilon$ de composantes $\varepsilon x$, $\varepsilon y$ et $\varepsilon z$ vérifiant la relation $\varepsilon = E / Hn$.

Lesdites composantes $\varepsilon x$, $\varepsilon y$ et $\varepsilon z$ sont donc définies par les relations suivantes :

$\varepsilon_x$ = $a_{11}$ Hmx + $a_{12}$ Hmy + $a_{13}$ Hmz + $t_{11}$ Hmx' + $t_{12}$ Hmy' + $t_{13}$ Hmz' + hpx - ($R_{11}$ + $R_{12}$ he + $R_{13}$ hv)

$\varepsilon_y$ = $a_{21}$ Hmx + $a_{22}$ Hmy + $a_{23}$ Hmz + $t_{21}$ Hmx' + $t_{22}$ Hmy' + $t_{23}$ Hmz' + hpx - ($R_{21}$ + $R_{22}$ he + $R_{23}$ hv)

$\varepsilon_z$ = $a_{31}$ Hmx + $a_{32}$ Hmy + $a_{33}$ Hmz + $t_{31}$ Hmx' + $t_{32}$ Hmy' + $t_{33}$ Hmz' + hpx - ($R_{31}$ + $R_{32}$ he + $R_{33}$ hv)

A partir desdites composantes, on détermine une erreur globale de la forme $E^2 = Ex^2 + Ey^2 + Ez^2$ ou de la forme $\varepsilon^2 = \varepsilon x^2 + \varepsilon y^2 + \varepsilon z^2$.

Puis on définit un système d'équations formé de n équations du type $(\partial\Sigma\varepsilon^2)/\partial ci = 0$, i = 1 à n, ou du type $(\partial\Sigma E^2)/\partial ci = 0$, $(\partial\Sigma\varepsilon^2)/\partial ci$ correspondant à la dérivée partielle de la somme des erreurs globales $\Sigma\varepsilon^2$, pour toutes les mesures, par rapport à un coefficient $ci$, les différents coefficients $ci$ représentant les coefficients à déterminer dudit modèle théorique de perturbation, à savoir les coefficients de [A], de $a$ et de Hp, ainsi que les composantes du champ magnétique effectif H ; et on résout par une méthode numérique ledit système d'équations de dimension 23 x 23.

Afin de retrouver des coefficients de dimensions exactes, on divise tous les coefficients obtenus par un diviseur approprié. Ce diviseur approprié peut par exemple être l'un des coefficients $a_{11}$, $a_{22}$ ou $a_{33}$ ou le déterminant de la matrice $[a_{ij}]$.

Les coefficients obtenus constituent le modèle correcteur (1), permettant de déterminer les valeurs exactes du champ magnétique à partir de valeurs de champ mesurées par le magnétomètre 2, en présence des perturbations magnétiques et d'un alignement quelconque du magnétomètre.

Au lieu du modèle linéaire non stationnaire (1) défini précédemment, on peut également utiliser selon l'invention :

- un modèle linéaire non stationnaire simplifié de la forme :

$$[A].Hm + \tau.Hm' + Hp \qquad (2)$$

$\tau$ étant un coefficient représentant le retard entre les mesures du champ magnétique, d'une part, et les mesures de cap et d'assiettes, d'autre part.

Les différents coefficients desdits modèles (2) et (3) sont déterminés de la même manière que les coefficients du modèle (1), c'est-à-dire tel que décrit précédemment.

Le mode de réalisation du procédé conforme à l'invention décrit ci-dessus permet donc de déterminer simultanément ledit modèle correcteur et les trois composantes du champ magnétique terrestre.

On décrit ci-dessous un mode de réalisation simplifié n'utilisant pas de référence de cap, et ne permettant de déterminer, en plus dudit modèle correcteur, que la composante verticale Hv dudit champ magnétique terrestre.

On utilise à cet effet l'un des trois modèles théoriques (1), (2), (3) définis précédemment. On décrit ci-après la mise en oeuvre uniquement à partir du modèle linéaire non stationnaire (1), les modèles non stationnaire simplifié (2) et stationnaire (3) étant traités de manière identique.

Le modèle théorique (1), défini sous la forme :

$$[M]^{-1}.([A].Hm + [T].Hm' + Hp) = H$$

s'écrit de façon détaillée :

$$[M]^{-1} \begin{vmatrix} A_{11} Hmx + A_{12} Hmy + A_{13} Hmz + T_{11} Hmx' + T_{12} Hmy' + T_{13} Hmz' + Hpx \\ A_{21} Hmx + A_{22} Hmy + A_{23} Hmz + T_{21} Hmx' + T_{22} Hmy' + T_{23} Hmz' + Hpy \\ A_{31} Hmx + A_{32} Hmy + A_{33} Hmz + T_{31} Hmx' + T_{32} Hmy' + T_{33} Hmz' + Hpz \end{vmatrix} = \begin{vmatrix} Hn \\ He \\ Hv \end{vmatrix}$$

Dans la présente hypothèse, les composantes Hn et He du champ magnétique effectif H sont inaccessibles du fait de l'absence de référence de cap. Par conséquent, seule la troisième équation du système précédent est exploitable à des fins d'identification d'une composante du champ magnétique, ladite troisième équation s'écrivant :

$R_{31}^* (A_{11} Hmx + A_{12} Hmy + A_{13} Hmz + T_{11} Hmx' + T_{12} Hmy' + T_{13} Hmz' + Hpx) +$
$R_{32}^* (A_{21} Hmx + A_{22} Hmy + A_{23} Hmz + T_{21} Hmx' + T_{22} Hmy' + T_{23} Hmz' + Hpy) +$
$R_{33}^* (A_{31} Hmx + A_{32} Hmy + A_{33} Hmz + T_{31} Hmx' + T_{32} Hmy' + T_{33} Hmz' + Hpz) = Hv.$

$R_{31}^*$, $R_{32}^*$ et $R_{33}^*$ sont les trois composantes de la troisième ligne de la matrice de passage $[M]^{-1}$ définie ci-dessus, c'est-à-dire que :

$R_{31}^* = - \sin\Theta$
$R_{32}^* = \cos\Theta.\sin\Phi$
$R_{33}^* = \cos\Theta.\cos\Phi.$

Ces coefficients $R_{31}^*$, $R_{32}^*$ et $R_{33}^*$ sont donc définis uniquement à partir des angles d'assiettes $\Theta$ et $\Phi$, et non à partir de l'angle de cap $\psi$.

Comme dans le mode de réalisation précédent, cette équation admet une infinité de solutions à une constante multiplicative près. Pour lever l'indétermination existante, on divise les deux membres de l'équation par Hv de manière à obtenir l'équation :

$R_{31}^* (a_{11} Hmx + a_{12} Hmy + a_{13} Hmz + t_{11} Hmx' + t_{12} Hmy' + t_{13} Hmz' + hpx) +$
$R_{32}^* (a_{21} Hmx + a_{22} Hmy + a_{23} Hmz + t_{21} Hmx' + t_{22} Hmy' + t_{23} Hmz' + hpy) +$
$R_{33}^* (a_{31} Hmx + a_{32} Hmy + a_{33} Hmz + t_{31} Hmx' + t_{32} Hmy' + t_{33} Hmz' + hpz) = 1.$
avec

$a_{ij} = A_{ij}/Hv$
$t_{ij} = T_{ij}/Hv$
$hpx = Hpx/Hv$
$hpy = Hpy/Hv$
$hpz = Hpz/Hv$

On détermine dans ce cas uniquement la composante $\varepsilon z$ du vecteur d'erreur $\varepsilon$. Cette composante $\varepsilon z$ est définie par la relation :

$\varepsilon z = R_{31}* (a_{11} Hmx + a_{12} Hmy + a_{13} Hmz + t_{11} Hmx' + t_{12} Hmy' + t_{13} Hmz' + hpx) +$
$R_{32}* (a_{21} Hmx + a_{22} Hmy + a_{23} Hmz + t_{21} Hmx' + t_{22} Hmy' + t_{23} Hmz' + hpy) +$
$R_{33}* (a_{31} Hmx + a_{32} Hmy + a_{33} Hmz + t_{31} Hmx' + t_{32} Hmy' + t_{33} Hmz' + hpz) - 1.$

Puis on définit un système d'équations formé d'équations du type $(\partial \Sigma \varepsilon z^2)/\partial ci = 0$, les coefficients c̲i̲ représentant de nouveau les coefficients à déterminer du modèle théorique (1), et on résout ce système de façon usuelle.

Les coefficients obtenus sont divisés par $a_{11}$ pour obtenir les dimensions correctes et le modèle correcteur (1) recherché.

La mise en oeuvre est donc identique à celle présentée précédemment.

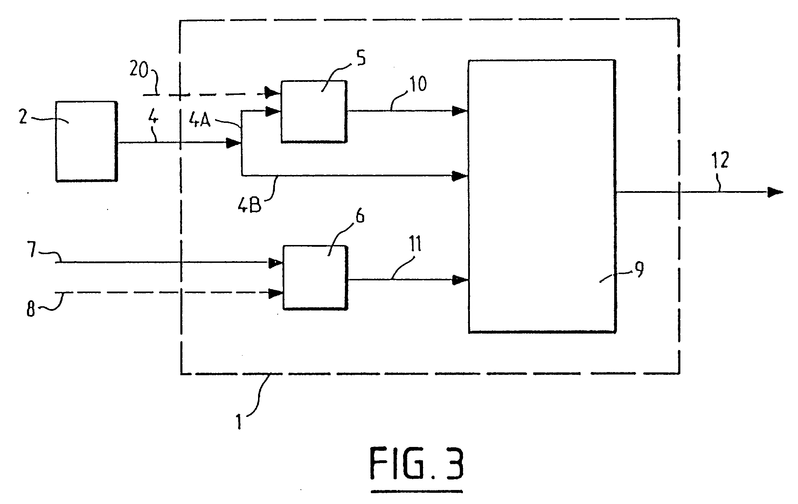

Pour ces mises en oeuvre du procédé conforme à l'invention, le dispositif 1, qui est relié par une liaison 4 au magnétomètre 2, comporte, selon l'invention et tel que représenté sur la figure 3 :

- un module de calcul 5 recevant, par l'intermédiaire d'une branche 4A de ladite liaison 4 dédoublée en deux branches 4A et 4B, la valeur Hm du champ magnétique mesuré par le magnétomètre 2, ledit module de calcul 5 étant susceptible de déterminer la dérivée Hm' par rapport au temps dudit champ magnétique mesuré Hm ;
- un module de calcul 6 recevant d'un dispositif approprié non représenté, d'une part, les valeurs des assiettes du véhicule 3 par l'intermédiaire d'une liaison 7 et, d'autre part, éventuellement, c'est-à-dire si elle est nécessaire pour la mise en oeuvre de l'invention, la valeur du cap du véhicule 3 par l'intermédiaire d'une liaison 8, ledit module de calcul 6 étant susceptible de calculer les coefficients de la matrice de passage [M] utilisés lors de la mise en oeuvre de l'invention ; et
- un module principal de calcul 9 relié auxdits modules de calcul 5 et 6 et audit magnétomètre 2, par l'intermédiaire respectivement de liaisons 10 et 11 et de la branche 4B de la liaison 4, ledit module principal de calcul 9 étant susceptible de déterminer ledit modèle correcteur et ledit champ magnétique effectif et pouvant transmettre les résultats obtenus par une liaison 12, par exemple à un dispositif utilisateur non représenté.

Bien entendu, ledit module principal de calcul 9 et lesdits modules de calcul 5 et 6 peuvent être implantés éventuellement dans des calculateurs différents.

Selon un mode de mise en oeuvre particulièrement avantageux, le module de calcul 5 calcule la dérivée $\overrightarrow{Hm}'$ à partir du produit vectoriel du champ magnétique mesuré $\overrightarrow{Hm}$ par le vecteur de rotation instantanée $\vec{\omega}$ du véhicule 3 dans le référentiel véhicule R1, c'est-à-dire que $\overrightarrow{Hm}' = \overrightarrow{Hm} \wedge \vec{\omega}$. Le vecteur $\vec{\omega}$ peut être transmis à cet effet au module de calcul 5 par l'intermédiaire d'une liaison 20. Cette méthode présente l'avantage de fournir une dérivée qui n'est pas limitée en hautes fréquences, au contraire d'autres méthodes connues.

La présente invention telle que décrite précédemment présente de nombreux avantages, en particulier :

- une augmentation de la précision des résultats obtenus par rapport aux méthodes connues ;
- une installation géométrique complètement libre du magnétomètre 2 sur le véhicule 3 ;
- une facilité de mise en oeuvre du procédé conforme à l'invention, en une seule phase d'opérations ;
- un dispositif de mise en oeuvre 1 simple et peu coûteux ; et
- une moindre exigence concernant la précision du magnétomètre.

De plus, le dispositif 1 conforme à l'invention peut être utilisé avantageusement par différents types de systèmes non représentés et embarqués à bord dudit véhicule 3.

Par exemple, un système de référence d'attitude et de cap d'un aéronef, comportant entre autres un magnétomètre pour corriger une éventuelle dérive du cap, peut utiliser le dispositif 1 pour corriger les erreurs dues à des perturbations dans les mesures dudit magnétomètre.

Par ailleurs, une centrale inertielle d'un aéronef, associée à un magnétomètre, peut utiliser le dispositif 1 conforme à l'invention pour déterminer de façon précise, en collaboration avec ledit magnétomètre, la déclinaison et l'inclinaison du champ magnétique terrestre, ainsi que pour corriger les erreurs de mesure dudit magnétomètre.

Ces différents exemples permettent de bien mettre en évidence la multiplicité d'utilisations et les avantages de la présente invention.

**Revendications**

1.  Procédé pour corriger des erreurs dans les mesures d'un magnétomètre (2) monté à bord d'un véhicule (3), dues à des perturbations magnétiques ainsi qu'à un mauvais alignement du magnétomètre (2) par rapport à un référentiel véhicule (R1) lié audit véhicule (3),
    caractérisé en ce que :

    -   on définit un modèle théorique correcteur des erreurs du magnétomètre de la forme :

    $$Hc = [A].Hm + a.Hm' + Hp$$

    dans lequel :

    -   . Hc est le champ corrigé,
    -   . [A] est une matrice à déterminer,
    -   . $\underline{a}$ est un coefficient ou une matrice à déterminer,
    -   . Hp est un champ perturbateur à déterminer,
    -   . Hm est la valeur mesurée par le magnétomètre (2) dans le référentiel véhicule (R1) du champ magnétique, et
    -   . Hm' est la dérivée par rapport au temps dudit champ magnétique mesuré Hm qui varie en fonction de la position angulaire du véhicule ;

    -   on considère que le champ corrigé Hc est le champ terrestre défini dans le référentiel véhicule de sorte que :

    $$[A].Hm + a.Hm' + Hp = [M].H$$

    avec :

    -   . H la valeur effective du champ magnétique dans un référentiel de base (R2), et
    -   . [M] une matrice de passage dudit référentiel de base (R2) audit référentiel véhicule (R1) ;

    -   on effectue au moins une mesure Hm du champ magnétique au moyen du magnétomètre (2) ;
    -   on calcule la dérivée Hm' dudit champ magnétique mesuré Hm ;
    -   on détermine les coefficients de la matrice de passage [M] ;
    -   on définit un vecteur d'erreur E de composantes Ex, Ey et Ez, défini par la relation

    $$E = [M].H - ([A].Hm + a.Hm' + Hp) ;$$

    -   on définit une erreur globale $E^2 = Ex^2 + Ey^2 + Ez^2$ ;
    -   on définit un système d'équations formé de $\underline{n}$ équations du type $(\partial \Sigma E^2)/\partial ci = 0$, i = 1 à n, $(\partial \Sigma E^2)/\partial ci$ correspondant à la dérivée partielle de la somme des erreurs globales, pour toutes les mesures, $\Sigma E^2$ par rapport à un coefficient $\underline{c}i$, les différents coefficients $\underline{c}i$ représentant les coefficients à déterminer dudit modèle théorique, à savoir les coefficients de [A], de $\underline{a}$ et de Hp, ainsi qu'au moins une composante du champ magnétique effectif H ;
    -   on résout ledit système d'équations de manière à obtenir lesdits coefficients $\underline{c}i$, dont ladite composante du champ magnétique effectif H ; et
    -   on utilise le modèle correcteur obtenu à partir desdits coefficients pour corriger les erreurs dues à des perturbations magnétiques et à de mauvais alignements dans les mesures dudit magnétomètre (2).

2.  Procédé selon la revendication 1, pour déterminer uniquement la composante verticale du champ magnétique, caractérisé en ce qu'on utilise comme erreur globale $E^2 = Ez^2$, de sorte que seuls les coefficients de la troisième ligne de la matrice $[M]^{-1}$ sont utilisés, ladite matrice $[M]^{-1}$ étant la matrice de passage dudit référentiel véhicule (R1) audit référentiel de base (R2), lesdits coefficients étant déterminés à partir des assiettes dudit véhicule (3).

3.  Procédé selon la revendication 1, pour déterminer les trois composantes du champ magnétique,

caractérisé en ce que les coefficients de la matrice [M] sont déterminés à partir des assiettes, ainsi qu'à partir du cap dudit véhicule (3).

4. Procédé selon l'une des revendications 1 à 3,
   caractérisé en ce que ledit modèle théorique est un modèle linéaire non stationnaire, dans lequel a représente une matrice [T], prenant en compte les courants de Foucault existant sur le véhicule (3), et le retard entre, d'une part, la mesure du champ magnétique et, d'autre part, des mesures d'assiettes et de cap du véhicule, ainsi qu'au moins partiellement la limitation de la bande passante du magnétomètre.

5. Procédé selon l'une des revendications 1 à 3,
   caractérisé en ce que ledit modèle théorique est un modèle linéaire non stationnaire simplifié, dans lequel a représente un coefficient $\tau$ prenant en compte le retard entre, d'une part, la mesure du champ magnétique et, d'autre part, des mesures d'assiettes et de cap du véhicule, ainsi qu'au moins partiellement la limitation de la bande passante du magnétomètre.

6. Procédé selon l'une quelconque des revendications 1 à 5,
   caractérisé en ce que la dérivée Hm' du champ magnétique mesuré Hm est calculée par la relation $\overrightarrow{Hm}' = \overrightarrow{Hm} \wedge \overrightarrow{\omega}$, dans laquelle $\overrightarrow{\omega}$ représente le vecteur de rotation instantanée du véhicule (3).

7. Procédé selon l'une quelconque des revendications 3 à 5,
   caractérisé en ce que ledit cap est un cap géographique.

8. Procédé selon l'une quelconque des revendications 3 à 5,
   caractérisé en ce que ledit cap est un cap délivré par une centrale d'attitude et de cap en mode gyroscopique libre.

9. Dispositif pour la mise en oeuvre du procédé spécifié sous l'une quelconque des revendications 1 à 8, destiné à corriger des erreurs dans les mesures d'un magnétomètre (2) monté à bord d'un véhicule (3), dues à des perturbations magnétiques ainsi qu'à un mauvais alignement du magnétomètre (2) par rapport à un référentiel véhicule (R1) lié audit véhicule (3),
   caractérisé en ce qu'il comporte :

   - un premier module de calcul (5) recevant le champ magnétique Hm mesuré par le magnétomètre (2) dans le référentiel véhicule (R1) et déterminant la dérivée Hm' par rapport au temps dudit champ magnétique mesuré Hm qui varie en fonction de la position angulaire du véhicule (3) ;
   - un second module de calcul (6) déterminant les coefficients d'une matrice de passage [M] d'un référentiel de base (R2) audit référentiel véhicule (R1) ; et
   - un module principal de calcul (9) relié auxdits premier et second modules de calcul (5, 6), déterminant au moins une composante du champ magnétique effectif, et corrigeant les erreurs dues à des perturbations magnétiques et à de mauvais alignements dans les mesures dudit magnétomètre (2), en utilisant un champ corrigé Hc vérifiant Hc = [A].Hm + a.Hm' + Hp, avec [A] une matrice à déterminer, a un coefficient ou une matrice à déterminer, et Hp un champ perturbateur à déterminer, ledit module principal de calcul (9) déterminant ledit champ corrigé Hc :

     · en résolvant un système d'équations formé de n équations du type $(\partial\Sigma E^2)/\partial c_i = 0$, i = 1 à n, $E^2$ étant une erreur globale obtenue à partir d'un vecteur d'erreur E tel que E = [M].H - ([A].Hm + a.Hm' + Hp), la matrice de passage $[M]^{-1}$ étant reçue dudit second module de calcul (6), et $(\partial\Sigma E^2)/\partial c_i$ correspondant à la dérivée partielle de la somme des erreurs globales, pour toutes les mesures, $\Sigma E^2$ par rapport à un coefficient $c_i$, de manière à obtenir les différents coefficients $c_i$ représentant les coefficients à déterminer dudit champ corrigé, à savoir les coefficients de [A], de a et de Hp, ainsi qu'au moins une composante du champ magnétique effectif H ; et
     · en calculant ledit champ corrigé Hc à partir desdits coefficients $c_i$ et de la dérivée Hm' reçue dudit premier module de calcul (5).

10. Dispositif selon la revendication 9,
    caractérisé en ce que ledit module principal de calcul (9) et lesdits premier et second modules de calcul (5, 6) sont implantés dans des calculateurs différents.

11. Système de référence d'attitude et de cap embarqué à bord d'un aéronef et comportant un magnétomètre pour corriger une éventuelle dérive de la mesure du cap,

caractérisé en ce qu'il comporte le dispositif (1) spécifié sous l'une des revendications 9 ou 10, ledit dispositif (1) étant utilisé pour corriger les erreurs de mesure dudit magnétomètre.

12. Centrale inertielle d'un aéronef, associée à un magnétomètre,

caractérisée en ce qu'elle comporte le dispositif (1) spécifié sous l'une des revendications 9 ou 10, ledit dispositif (1) étant utilisé pour déterminer de façon précise, en collaboration avec ledit magnétomètre, le champ magnétique terrestre, ainsi que pour corriger les erreurs de mesure dudit magnétomètre.

**Patentansprüche**

1. Verfahren zur Korrektur von Fehlern bei den Messungen eines Magnetometers (2), das an Bord eines Fahrzeugs (3) befestigt ist, die aus magnetischen Störungen sowie einer schlechten Ausrichtung des Magnetometers (2) bezogen auf ein Fahrzeugbezugssystem (R1) resultieren, das mit dem Fahrzeug (3) verbunden ist, dadurch gekennzeichnet, daß:

   - man ein theoretisches Modell zur Korrektur der Fehler des Magnetometers der Form: $Hc = [A].Hm + a.Hm' + Hp$ definiert, bei dem:

     - Hc das korrigierte Feld ist,
     - [A] eine zu bestimmende Matrix ist,
     - a ein Koeffizient oder eine zu bestimmende Matrix ist,
     - Hp ein zu bestimmendes Störfeld ist,
     - Hm der mit dem Magnetometer (2) gemessene Wert des magnetischen Feldes im Fahrzeugbezugssystem (R1) ist, und
     - Hm' die Ableitung nach der Zeit des durch Hm gemessenen magnetischen Feldes ist, die als Funktion der Winkelposition des Fahrzeuges variiert;

   - man bedenkt, daß das korrigierte Feld Hc das Erdfeld ist, das durch das Fahrzeugbezugssystem so definiert ist, daß:

$$[A].Hm + a.Hm' + Hp = [M].H$$

   wobei:

     - H der effektive Wert des Magnetfelds in einem Basisbezugssystem (R2), und
     - [M] eine Übergangsmatrix des Basisbezugsystems (R2) zum Fahrzeugbezugssystem (R1) ist;

   - man wenigstens eine Messung Hm des magnetischen Feldes mit Hilfe des Magnetometers (2) ausführt;
   - man die Ableitung Hm' des gemessenen magnetischen Feldes Hm berechnet;
   - man die Koeffizienten der Übergangsmatrix [M] bestimmt;
   - man einen Fehlervektor E mit den Komponenten Ex, Ey und Ez definiert, der durch die Gleichung:

$$E = [M].H - ([A].Hm + a.Hm' + Hp)$$

   definiert ist;
   - man einen globalen Fehler $E^2 = Ex^2 + Ey^2 + Ez^2$ definiert;
   - man ein Gleichungssystem definiert, das aus $\underline{n}$ Gleichungen des Typs $(\delta \Sigma E^2) / \delta c_i = 0$, i = 1 bis n gebildet ist, wobei $(\delta \Sigma E^2) / \delta c_i$ der partiellen Ableitung der Summe der globalen Fehler für alle Messungen, $\Sigma E^2$ nach einem Koeffizienten $\underline{c_i}$ entspricht, wobei die verschiedenen Koeffizienten $\underline{c_i}$ die zu bestimmenden Koeffizienten des theoretischen Modells darstellen, nämlich die Koeffizienten von [A], $\underline{a}$ und Hp, sowie wenigstens eine Komponente des effektiven Magnetfelds H;
   - man das Gleichungssystem löst, um die Koeffizienten $c_i$ und deren Komponente des effektiven Magnetfeldes H zu erhalten; und
   - man benützt das auf der Grundlage der Koeffizienten erhaltene Korrekturmodell, um die Fehler, die aus den

EP 0 718 598 B1

magnetischen Störungen und aus der schlechten Ausrichtung in den Messungen des Magnetometers (2) resultieren, zu korrigieren.

**2.** Verfahren gemäß Anspruch 1, zur alleinigen Bestimmung der vertikalen Komponente des magnetischen Feldes, dadurch gekennzeichnet, daß man als globalen Fehler $E^2 = Ez^2$ gebraucht, so daß allein die Koeffizienten der dritten Zeile der Matrix $[M]^{-1}$ gebraucht werden, wobei die Matrix $[M]^{-1}$ die Übergangsmatrix des Fahrzeugbezugssystems (R1) in das Basisbezugssystem (R2) ist und wobei die Koeffizienten ausgehend von der Lage des Fahrzeugs (3) bestimmt werden.

**3.** Vorrichtung nach Anspruch 1 zur Bestimmung der drei Komponenten des magnetischen Feldes, dadurch gekennzeichnet, daß die Koeffizienten der Matrix [M] ausgehend von den Lagen, sowie des Kurses des Fahrzeugs (3) bestimmt werden.

**4.** Verfahren nach einem der Ansprüche 1 bis 3, dadurch gekennzeichnet, daß das theoretische Modell ein lineares, nicht stationäres Modell ist, in dem a eine Matrix [T] darstellt, die die Foucaultschen Ströme, die im Fahrzeug (3) vorhanden sind und den Zeitversatz zwischen einerseits der Messung des magnetischen Feldes und andererseits den Messungen der Lagen und des Kurses des Fahrzeugs sowie wenigstens teilweise die Begrenzung der Bandbreite des Magnetometers berücksichtigt.

**5.** Verfahren nach einem der Ansprüche 1 bis 3, dadurch gekennzeichnet, daß das theoretische Modell ein lineares, nicht stationäres vereinfachtes Modell ist, in dem a einen Koeffizienten $\tau$ darstellt, der den Zeitversatz zwischen einerseits der Messung des magnetischen Feldes und andererseits den Messungen der Lagen und des Kurses des Fahrzeugs sowie wenigstens teilweise die Begrenzung der Bandbreite des Magnetometers berücksichtigt.

**6.** Verfahren nach einem der Ansprüche 1 bis 5, dadurch gekennzeichnet, daß die Ableitung Hm' des gemessenen Magnetfeldes Hm durch die Gleichung $\overrightarrow{Hm}' = \overrightarrow{Hm} \Lambda \vec{\omega}$ berechnet wird, in der $\vec{\omega}$ den gegenwärtigen Rotationsvektor des Fahrzeugs (3) darstellt.

**7.** Verfahren nach einem der Ansprüche 3 bis 5, dadurch gekennzeichnet, daß der Kurs ein geographischer Kurs ist.

**8.** Verfahren nach einem der Ansprüche 3 bis 5, dadurch gekennzeichnet, daß der Kurs ein Kurs ist, der durch eine Zentraleinheit für die Lage und den Kurs in einer freien gyroskopischen Weise angegeben wird.

**9.** Vorrichtung für die Durchführung eines Verfahrens nach einem der Ansprüche 1 bis 8, die dazu bestimmt ist, Fehler in den Messungen eines Magnetometers (2), das an Bord eines Fahrzeugs (3) befestigt ist, zu korrigieren, die aus magnetischen Störungen, sowie einer schlechten Ausrichtung des Magnetometers (2) bezogen auf ein Fahrzeugbezugssystem (R1), das mit dem Fahrzeug (3) verbunden ist, resultieren, dadurch gekennzeichnet, daß sie folgendes umfaßt:

- eine erste Recheneinheit (5), die das magnetische Feld Hm, das durch das Magnetometer (2) im Fahrzeugbezugssystem (R1) gemessen wird, aufnimmt und die Ableitung Hm' des gemessenen Magnetfeldes Hm nach der Zeit bestimmt, die als Funktion der Winkelposition des Fahrzeugs (3) variiert;
- eine zweite Recheneinheit (6), die die Koeffizienten einer Übergangsmatrix [M] des Basisbezugssystems (R2) in das Fahrzeugbezugssystems (R1) bestimmt; und
- eine Hauptrecheneinheit (9), die mit der ersten und der zweiten Recheneinheit (5, 6) verbunden ist, die wenigstens eine Komponente des effektiven Magnetfelds bestimmt und die Fehler, die aus den magnetischen Störungen und aus den schlechten Ausrichtungen in den Messungen des Magnetometers (2) hervorgehen, korrigiert, unter Benutzung eines korrigierten Feldes Hc, das Hc = [A].Hm + a.Hm' + Hp erfüllt, wobei [A] eine zu bestimmende Matrix ist, a ein Koeffizient oder eine zu bestimmende Matrix und Hp ein zu bestimmendes Störfeld ist, wobei die Hauptrecheneinheit (9) das korrigierte Feld Hc bestimmt:

  - durch Lösung eines Gleichungssystems, das aus n Gleichungen des Typs $(\delta \Sigma E^2) / \delta ci = 0$, i = 1 bis n besteht, wobei $E^2$ ein globaler Fehler ist, den man ausgehend von einem Fehlervektor E mit E = [M].H - ([A].Hm + a.Hm' + hp) erhält, wobei die Übergangsmatrix [M] aus der zweiten Recheneinheit (6) erhalten wird und $(\delta \Sigma E^2) / \delta ci$ der partiellen Ableitung der Summe der globalen Fehler für alle Messungen $\Sigma E^2$ nach einem Koeffizienten ci entspricht, um die unterschiedlichen Koeffizienten ci, die die Koeffizienten zur Bestimmung des korrigierten Feldes darstellen, nämlich die Koeffizienten von [A], von a und von Hp, sowie wenigstens eine Komponente des effektiven magnetischen Feldes H zu erhalten; und

13

- durch Berechnung des korrigierten Feldes Hc anhand der Koeffizienten $\underline{ci}$ und der Ableitung Hm', die man aus der ersten Recheneinheit (5) erhält.

10. Vorrichtung nach Anspruch 9, dadurch gekennzeichnet, daß die Hauptrecheneinheit (9) und die erste und die zweite Recheneinheit (5, 6) in verschiedenen Rechnern angeordnet sind.

11. Referenzsystem für Lage und Kurs, das an Bord eines Luftfahrzeugs eingebaut ist und ein Magnetometer für die Korrektur einer eventuellen Abweichung von der Messung des Kurses enthält, dadurch gekennzeichnet, daß es eine Vorrichtung (1) enthält, die nach einem der Ansprüche 9 oder 10 spezifiziert ist, wobei die Vorrichtung (1) dazu benutzt wird, um die Fehler der Messungen des Magnetometers zu korrigieren.

12. Inertialzentraleinheit eines Luftfahrzeugs, die mit einem Magnetometer verbunden ist, dadurch gekennzeichnet, daß sie die Vorrichtung (1) umfaßt, die nach einem der Ansprüche 9 oder 10 spezifiziert ist, wobei die Vorrichtung (1) dazu benutzt wird, um im Zusammenwirken mit dem Magnetometer das Erdmagnetfeld genau zu bestimmen, sowie um die Fehler der Messungen des Magnetometers zu korrigieren.


## Claims

1. Method for correcting errors in the measurements of a magnetometer (2) mounted on board a vehicle (3), due to magnetic perturbations as well as to a misalignment of the magnetometer (2) relative to a vehicle reference frame (R1) connected with the said vehicle (3), characterized in that:

    - a theoretical model correcting the errors of the magnetometer is defined in the form:

$$Hc = [A].Hm + a.Hm' + Hp$$

    in which

    - Hc is the corrected field,
    - [A] is a matrix to be determined,
    - $\underline{a}$ is a coefficient or a matrix to be determined,
    - Hp is a perturbing field to be determined,
    - Hm is the value measured by the magnetometer (2) in the vehicle reference frame (R1) of the magnetic field, and
    - Hm' is the time derivative of the said measured magnetic field Hm which varies as a function of the angular position of the vehicle;

    - the corrected field Hc is assumed to be the terrestrial field defined in the vehicle reference frame, so that:

$$[A].Hm + a.Hm' + Hp = [M].H$$

    with:

    - H the effective value of the magnetic field in a base reference frame (R2), and
    - [M] a change of frame matrix from the said base reference frame (R2) to the said vehicle reference frame (R1);

    - at least one measurement Hm of the magnetic field is taken using the magnetometer (2);
    - the derivative Hm' of the said measured magnetic field Hm is calculated;
    - the coefficients of the change of frame matrix [M] are determined;
    - an error vector E with components Ex, Ey and Ez is defined, defined by the equation

$$E = [M].H - ([A].Hm + a.Hm' + Hp);$$

- a composite error $E^2 = Ex^2 + Ey^2 + Ez^2$ is defined;
- a system of equations formed by $\underline{n}$ equations of the type $(\partial \Sigma E^2)/\partial ci = 0$, i = 1 to n, $(\partial \Sigma E^2)/\partial ci$ corresponding to the partial derivative of the sum $\Sigma E^2$ of the composite errors, for all the measurements, with respect to a coefficient $\underline{ci}$, the various coefficients $\underline{ci}$ representing the coefficients to be determined in the said theoretical model, namely the coefficients of [A], of $\underline{a}$ and of Hp, as well as at least one component of the effective magnetic field H;
- the said system of equations is solved so as to obtain the said coefficients $\underline{ci}$, including the said component of the effective magnetic field H; and
- the corrective model obtained from the said coefficients is used to correct the errors due to magnetic perturbations and misalignments in the measurements of the said magnetometer (2).

2. Method according to Claim 1, for determining only the vertical component of the magnetic field, characterized in that $E^2 = Ez^2$ is used as composite error, so that only the coefficients of the third row of the matrix $[M]^{-1}$ are used, the said matrix $[M]^{-1}$ being the change of frame matrix from the said vehicle reference frame (R1) to the said base reference frame (R2), the said coefficients being determined from the attitudes of the said vehicle (3).

3. Method according to Claim 1, for determining all three components of the magnetic field, characterized in that the coefficients of the matrix [M] are determined from the attitudes as well as from the heading of the said vehicle (3).

4. Method according to one of Claims 1 to 3, characterized in that the said theoretical model is a dynamic linear model, in which $\underline{a}$ represents a matrix [T] taking into account the eddy currents existing on the vehicle (3) and the delay between, on the one hand, the measurement of the magnetic field and, on the other hand, the measurements of the attitudes and of the heading of the vehicle, as well as at least partially the limiting of the passband of the magnetometer.

5. Method according to one of Claims 1 to 3, characterized in that the said theoretical model is a simplified dynamic linear model, in which $\underline{a}$ represents a coefficient $\tau$ taking into account the delay between, on the one hand, the measurement of the magnetic field and, on the other hand, the measurements of the attitudes and of the heading of the vehicle, as well as at least partially the limiting of the passband of the magnetometer.

6. Method according to any one of Claims 1 to 5, characterized in that the derivative Hm' of the measured magnetic field Hm is calculated by the equation $\vec{H}m' = \vec{H}m \wedge \vec{\omega}$ in which $\vec{\omega}$ represents the instantaneous rotation vector of the vehicle (3).

7. Method according to any one of Claims 3 to 5, characterized in that the said heading is a geographic heading.

8. Method according to any one of Claims 3 to 5, characterized in that the said heading is a heading delivered by a free gyroscopic mode attitude and heading unit.

9. A device for implementing the method specified under any one of Claims 1 to 8, intended to correct errors in the measurements of a magnetometer (2) mounted on board a vehicle (3) due to magnetic perturbations as well as to a misalignment of the magnetometer (2) relative to a vehicle reference frame (R1) connected to the said vehicle (3),

   characterized in that it includes:

- a first calculation module (5), receiving the magnetic field Hm measured by the magnetometer (2) in the vehicle reference frame (R1) and determining the time derivative Hm' of the said measured magnetic field Hm which varies as a function of the angular position of the vehicle (3);
- a second calculation module (6) which determines the coefficients of a change of frame matrix [M] of a base reference frame (R2) to the said vehicle reference frame (R1); and
- a main calculation module (9), connected to the said first and second calculation modules (5, 6), determining at least one component of the effective magnetic field, and correcting the errors due to magnetic perturbations and to misalignments in the measurements of the said magnetometer (2), by using a corrected field Hc satisfying Hc = [A].Hm + a.Hm' + Hp, with [A] a matrix to be determined, $\underline{a}$ a coefficient or a matrix to be determined, and Hp a perturbing field to be determined, the said main calculation module (9) determining the said corrected field Hc:

  • by solving a system of equations formed by $\underline{n}$ equations of the type $(\partial \Sigma E^2)/\partial ci = 0$, i = 1 to n, $E^2$ being a

composite error obtained from an error vector E such that E = [M].H - ([A].Hm + a.Hm' + Hp), the change of frame matrix [M] being received from the said second calculation module (6), and $(\partial \Sigma E^2)/\partial ci$ corresponding to the partial derivative of the sum $\Sigma E^2$ of the composite errors, for all the measurements, with respect to a coefficient $ci$, so as to obtain the various coefficients $ci$ representing the coefficients to be determined of the said corrected field, namely the coefficients of [A], of $a$ and of Hp, as well as at least one component of the effective magnetic field H; and

- by calculating the said corrected magnetic field Hc from the said coefficients $ci$ and the derivative Hm' received from the said first calculation module (5).

10. Device according to Claim 9, characterized in that the said main calculation module (9) and the said first and second calculation modules (5, 6) are installed in different computers.

11. Aircraft on-board attitude and heading reference system including a magnetometer for correcting a possible drift in the heading measurement, which includes the device (1) specified under either of Claims 9 and 10, the said device (1) being used to correct the measurement errors of the said magnetometer.

12. Aircraft inertial unit associated with a magnetometer, which includes the device (1) specified under either of Claims 9 and 10, the said device (1) being used to determine the terrestrial magnetic field, in precise fashion, in collaboration with the said magnetometer as well as to correct the measurement errors of the said magnetometer.

FIG.1

EP 0 718 598 B1

FIG. 2

FIG.3